(19) Europäisches Patentamt / European Patent Office / Office européen des brevets

(11) **EP 3 343 128 A1**

(12) **EUROPEAN PATENT APPLICATION**

(43) Date of publication:
04.07.2018 Bulletin 2018/27

(51) Int Cl.:
*F24H 9/20* (2006.01)     *F24D 19/10* (2006.01)
*G06Q 50/06* (2012.01)

(21) Application number: **16207021.3**

(22) Date of filing: **27.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **VITO NV**
**2400 Mol (BE)**

(72) Inventors:
• **VANTHOURNOUT, Koen**
  **2400 Mol (BE)**
• **CARDINAELS, Wim**
  **2400 Mol (BE)**
• **VAN DEUN, Steven**
  **2400 Mol (BE)**

(74) Representative: **IPLodge bvba**
**Technologielaan 9**
**3001 Heverlee (BE)**

(54) **PROFILING OF HOT WATER USE FROM ELECTRICAL THERMAL STORAGE VESSELS**

(57)     A method and retrofit system hot water or cold water consumption profiling is described to obtain electrical flexibility data of hot or cold thermal storage vessels driven by heat pump or a heat exchanger e.g. driven by electricity, such as electrical boilers with resistance heaters or driven by a heat pump or heat exchanger e.g. driven by electricity. In particular the present invention relates to determination of flexibility of thermal storage vessels such as DHW buffers or DCW buffers, e.g. for use in stabilisation of the electricity grid.

Fig. 2

## Description

The present application relates to hot water or cold water consumption profiling to obtain electrical flexibility data of cold thermal storage vessels driven by heat pump or a heat exchanger, or electrical boilers with resistance heaters or driven by a heat pump or heat exchanger. In particular the present invention relates to determination of flexibility of thermal storage vessels such as DHW (domestic heating of water) buffers or DCW (domestic cooling of water) buffers, e.g. for use in stabilisation of the electricity grid.

## Background

It has been recognised that increasing flexibility is key for reliable operation of future power systems having high usage of renewable energy sources. The transition from conventional electrical power systems to a "smartgrid" will not be easy as is presently shown in some countries where negative pricing has been introduced. Negative pricing for electricity is not an indicator of success but more of failure to balance the electric supply and distribution systems.

Device flexibility assists an electricity supply and distribution system to maintain continuous economic service in the face of rapid and large swings in supply or demand. Traditionally, flexibility has been provided in power systems almost entirely by controlling the supply side, e.g. by absorbing generated energy in pump storage schemes. However suitable geographic sites for pump storage schemes are limited. If more renewable energy sources are to be used, additional flexibility is needed to maintain system reliability.

It is anticipated that having sufficient resources to meet demand will change to providing sufficient flexibility of the system to balance demand forecast errors and fluctuations. Whatever state of transition of power systems has been reached economic resources for provision of energy and operational flexibility must be provided.

The main focus at the present time is to options on the supply side. On the demand side, a one option is controlling large-scale industrial demand response. Most of the new demand options involve units small in scale. The use of these options depends on the enabling a communications and control infrastructure. But for such small scale units this is costly.

## Summary of the invention

One aim of embodiments of the present invention relates to the development of low cost adaptions of legacy equipment which allows a low cost transition towards a better communications and control infrastructure while providing a significant improvement in flexibility. There are dangers when retrofitting control devices to legacy equipment. If the new control system is able to alter thermostat set-points, the legacy equipment may be overdriven resulting in injury (scalding), damage (burn out of equipment or fires), extra expense (running devices at times when electricity is expensive), etc. Similar dangers exist if the new control system is able to override security cut-outs such as fuses or suppress alarms.

Embodiments of the present invention do not interfere with local security controls such as:

a) Do not alter local controller security based set-points, i.e. of legacy equipment
b) Do not override security cut-outs such as fuses or suppress alarms, i.e. of legacy equipment
c) Do not override thermostats, i.e. of legacy equipment, which continue to perform their duties as previously
d) Do not override local security features i.e. of legacy equipment, which would result in depletion of water in the storage vessels.

Embodiments of the present invention relate to hot or cooling thermal storage vessels, e.g. boilers providing hot water or thermal storage vessels providing cold water to residential or industrial users. Embodiments of the present invention include addition (e.g. to legacy vessels) of means for determining how much energy has been supplied (i.e. dispensed) by the thermal storage vessels. These means can be retrofitted and can include means to measure how much energy has been dispensed in the hot or cold water such as a calorimeter or a combination of devices emulating a calorimeter such as a retrofitted volume flow meter at the in- or outlet of each thermal storage vessel or group of thermal storage vessels and a temperature detector or sensor at the in- and outlet of the thermal storage vessels or the group of thermal storage vessels, e.g. in a conventional residential or industrial electrical energy distribution system or a DHW system or a DCW system. The temperature detector or sensor at the in- and/or outlet of the thermal storage vessels or the group of thermal storage vessels can be retrofitted.

A device to measure electrical energy consumption to drive the thermal storage vessels or group of thermal storage vessels can also be provided e.g. a wattmeter, for example retrofitted to a legacy vessel 10. The device can include several devices such as an ammeter and a voltmeter from which the electrical energy supplied can be determined. A controllable switch can be added to a legacy vessel to control charging of the vessel, e.g. by retro-fitting. A controller is provided for reading out data from the calorimeter or the combination of devices such as a volume flow meter and/or temperature detector or sensor. Other data to be read out can be the consumption of electrical energy e.g. as measured by a wattmeter or voltage and current measurements (e.g. from a retrofitted ammeter and/or voltmeter) from which the wattage can be calculated. The controller may be adapted to store the energy consumption data from use of the water in the vessel and the wattage data related to the electrical energy used to charge the vessel over a time period. The controller may be adapted to communicate the historical data to a local or remote processing engine such as a computer, a microcontroller, or a microprocessor with memory etc. The remote processing engine can be a building controller, a cluster controller or a central controller. Any such controller having a local or remote processing engine such as a computer, a microcontroller, or a microprocessor with memory etc. can be adapted to process the data and to profile the cold water or hot water consumption. The profiling may include a prediction of consumption at a time in the future, e.g. a day ahead, at time intervals during the day. The profiling may include a prediction of consumption of electrical energy at a time in the future, e.g. a day ahead, at time intervals during the day of a thermal energy storage device or a group of thermal energy storage devices. The prediction can include a report of consumption of electrical energy at a time in the future of a thermal energy storage device or a group of thermal energy storage devices, e.g. a day ahead, at time intervals during the day. The profiling may include prediction of dispensing of hot or cold water from a thermal energy storage device or a group of thermal energy storage devices at a time in the future, e.g. a day ahead, at time intervals during the day, etc. The profiling may include a report detailing the prediction of dispensing of hot or cold water from a thermal energy storage device or a group of thermal energy storage devices at a time in the future, e.g. a day ahead, at time intervals during the day, etc.

An output of any of the methods or systems according to embodiments of the present invention can be used:

    to automatically activate a controllable switch to charge a thermal energy storage device or a group of thermal energy storage devices using electrical energy,
    to automatically operate a controllable switch to prevent charging a thermal energy storage device or a group of thermal energy storage devices using electrical energy,
    to prepare and transmit (e.g. automatically) technical information to any of:

-   a consumer
-   a network operator for system balancing and reserves
-   an energy supplier or generator for balancing the portfolio of generation and consumption
-   any actor active within an electricity supply and/or distribution system,

relating to adjustments to the operation of one or more thermal energy storage vessels and the supply of electricity thereto.

A temperature sensor or detector is preferably included on the cold water inlet, as this temperature tends to vary in practice and can be used to determine the energy flows of the DHW systems or of the DCW systems. The hot water thermal storage vessels can be electrical boilers with resistance heaters or driven by heat pumps or heat exchangers, e.g. driven by electricity. The cold water thermal storage vessels can be driven by heat pumps or heat exchangers, e.g. driven by electricity.

The profile of this hot or cold water consumption can be used optionally together with a State of Charge (SoC) characterisation of the thermal storage vessels in order to know the flexibility of the hot or cold water thermal storage vessels. This flexibility information (e.g. as well as the reports on dispensing and consumption) can be used by any of:

-   network operators for system balancing and reserves
-   energy suppliers or generators for balancing the portfolio of generation and consumption
-   any actor active within an electricity supply and/or distribution system.

Embodiments of the present invention can be used in stabilizing or balancing of an electricity supply system and/or electricity distribution and/or transmission grid, or otherwise in offering other services, e.g. ancillary, balancing or grid congestion management services.

Brief description of the drawings

    Fig. 1 shows a combination of an electrical supply system and thermal storage vessels for use in embodiments of the present invention.
    Fig. 2 shows a legacy boiler fitted with a retrofitted means to determine the amount of energy that has been provided by the vessel by supplying hot or cold water according to an embodiment of the present invention.

**Definitions**

**"Retrofitting"** refers to the addition of new technology or features to older systems, i.e. systems comprising legacy devices. A legacy device can be identified by its date of installation or from other records. A retrofitted device can be identified by its date of installation or from other records.

**"Local security features"** refers to legacy security features of a legacy storage vessel such as security based set-points, security cut-outs such as fuses, operation of thermostats, sounding of alarms, etc.

**Description of the illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Embodiments of the present invention preferably relate to:

    a) Small, highly variable individual residential consumer consumption of hot or cold water, as well as aggregated, building or industrial premises consumption;
    b) Where consumption data granularity is small (i.e. hourly or 15-min interval);
    c) very short-term predictions (hours ahead), or day-ahead predictions or longer term predictions;
    d) provision of prediction accuracy and day type, i.e., workday versus weekends or holidays.
    e) long-term and medium-term prediction for utility planning and maintenance purposes,
    f) short-term predictions used for demand response systems,
    g) very short-term predictions for ad hoc real-time control.

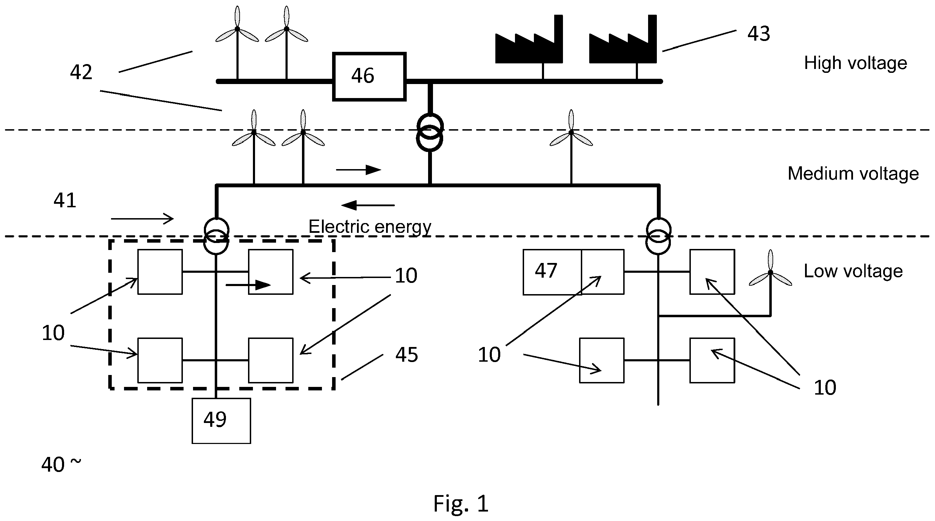

Embodiments of the present invention are used with an electric power system 40 shown schematically in Figure 1 where there are different producers 42, 43 and thermal storage vessels 10 or clusters of such devices 45 which consume electric energy for charging the thermal storage vessels. For this purpose they are coupled through an electricity supply network 41. This electricity supply network 41 allows for generation and transmission of electric energy between consumer thermal storage vessels 10, or groups 45 of such vessels and producers 42, 43. In addition a telecommunications network (not shown) is provided so that all the elements of the network can communicate with at least one central controller 46. The central controller 46 can be provided for controlling operation of the electricity supply network 41. There can also be local controllers 47 which control a thermal storage vessel or a number of such vessels 10 or, for example a cluster controller 49.

Ideally at all times during operation of such a power system 40 there needs to be a balance between production and consumption. Currently the main control paradigm is that production follows consumption. This is no longer efficient for mainly two reasons, with a continued integration of renewable energy, these balancing requirements become more demanding in terms of energy, power and ramp rate or at least ramp up/down. Handling this is inefficient as is requires ramping (up/down) of mainly gas fired power plants which have unfavorable energy efficiency (primary energy to practical energy). This results in excessive energy consumption and pollution. A second important point is that the balancing assets are mainly connected to the high voltage network, whilst renewable energy generators 43 are often located at the low and medium voltage level causing local voltage and congestion issues, and which requires local flexibility to solve these. For both issues, operating according to a prediction of electric consumption instead of production can provide part of the solution as demand flexibility is abundant and efficient in terms of energy and pollution, furthermore it is connected to both high and low voltage levels. Embodiments of the present invention can be used in the control or operation of the consumption of energy such as electricity supply to large clusters of thermal storage vessels which exhibit some flexibility, i.e. having the freedom to adjust the usage of energy over time. Embodiments of the present invention are able to determine this flexibility based on historical data.

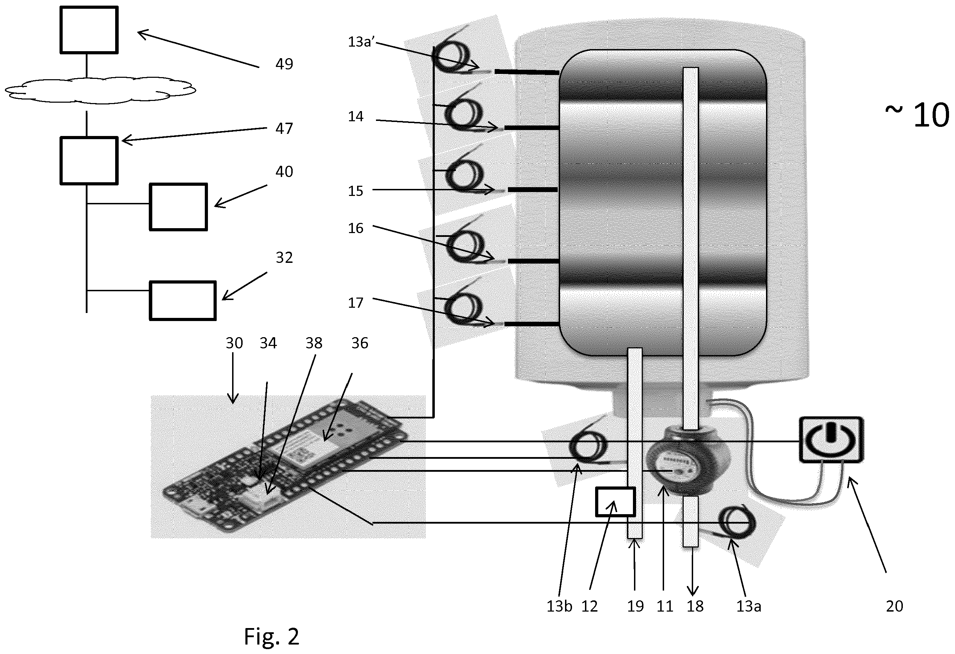

An example of a thermal storage vessel is shown in Figure 2 schematically. The thermal storage vessel 10 can be a boiler or thermal buffer in accordance with WO 2012/164102 which is incorporated herein by reference. As shown in Fig. 2 embodiments of the present invention relate to hot water or cold water thermal storage vessels 10. Hot water thermal storage vessels can be electrical boilers with resistance heaters or heated by heat pumps or heat exchangers, e.g. driven by electricity. Cold water thermal storage vessels can be cooled by heat pumps or heat exchangers e.g. driven by electricity. Heaters of coolers are not shown in Fig. 2, they are connected to an electrical power source and controllable switch 20. Hot or cold water thermal storage vessels 10 can provide hot water or cold water, respectively to residential or industrial users, via the outlets 18. Fresh water is taken in via inlet 19. Fresh water can be provided from a water mains as is typical for a residential boiler, or can be taken in from a return pipe of a district heating or cooling system. As shown in Fig. 2 embodiments of the present invention include additions to (e.g. legacy thermal storage vessels) of a calorimeter or a combination of devices serving as a calorimeter such as a volume flow meter 11, 12 at at least one of the outlet 18 and the inlet 19 of thermal storage vessels 10 respectively and a temperature detector or sensor 13a measuring water at the inlet and temperature detector or sensor 13b measuring water at the outlet of the thermal storage vessel (i.e. where the hot water is taken off). The volume flow meter 11, 12 at at least one of the outlet 18 and the inlet 19 and the temperature detectors or sensors 13a and 13b are connected to a controller 30 for receiving the values measured by these devices. Hot (or cold water for a cooling thermal buffer) is output from the thermal storage vessel 20 under gravity or a pump (not shown) can be provided if necessary to pump water out of the vessel 10. Similarly a pump (not shown) may be provided to pump fresh water into the vessel 10.

Fig. 2 shows a single thermal storage vessel 10 but the present invention can be carried out on a group of thermal storage vessels. It is advantageous to have a temperature sensor or detector 13b and a volume flow meter 12 included on the cold water inlet 19 as well as a temperature sensor or detector 13a at the outlet (or sensor detector 13a' if provided). The data collected by these devices can be used to determine the energy flows of a DHW system or of a DCW system. The outlet and inlet of a legacy thermal storage vessel can normally be accessed and hence allows these additional devices to be retro-fitted.

An additional element is a controllable switch 20 which is added to a legacy thermal storage vessel 10. The switch 20 is preferably controlled by the controller 30, to control charging of the vessel. The controller 30 can log when the switch is operated and also the length of time the thermal storage vessel 10 is charged. The controller 30 or the switch 20 may include a timer which activates the switch 20 at the same time each day or night unless altered by the controller 30. The electrical supply to a legacy thermal storage vessel 10 is usually accessible for the retrofitting of the controllable switch 20. The controllable switch 20 may also have appropriate fuses.

A device to measure electrical energy consumption to drive the thermal storage vessels or group of thermal storage vessels is preferably provided in any of the embodiments of the present invention e.g. a wattmeter, for example to a legacy vessel 10. The device to measure electrical energy consumption to drive the thermal storage vessels or group of thermal storage vessels can derive the consumption from the signals from several devices, e.g. from a voltmeter and an ammeter, or can be measured directly by a wattmeter or a calorimeter. Hence, the device to measure electrical energy consumption to drive the thermal storage vessels or group of thermal storage vessels can be located in the controller 30 and can calculate the consumption from the outputs of the devices such as a voltmeter and/or an ammeter. In legacy storage vessels there is usually access to the electrical system to be able to place and connect such devices as required.

The controller 30 is provided for reading out data from the means to determine how much energy has been dispensed such as data from the calorimeter or the combination of devices such as a volume flow meter 11, 12 and temperature detector or sensors 13a (13a' if provided) and 13b. The controller 30 may be adapted to store the data, e.g. in a memory 34 and to communicate the historical data to a local (36) or remote processing engine such as a computer 40, a microcontroller, or a microprocessor with memory etc. A network interface can be provided in the controller to access the remote computer, e.g. a wireless interface 38. The controller 30 or the local or remote processing engine such as a computer 40, a microcontroller, or a microprocessor with memory etc. is adapted to process the data and to profile the cold water or hot water consumption. The computer 40 and a wireless access point 32 may be provided on a Local Area network. The controller 30 and/or the computer 40 may be connected to or be part of a local controller 47 so that historical data collected by the controller 30 and/or the computer 40 may be transmitted to a local controller such as a building controller. The controller 30 and/or the computer 40 may be connected to a cluster controller 49 so that historical data collected by the controller 30 and/or the computer 40 may be transmitted to the cluster controller 49.

Profiling can include a prediction of consumption by a thermal storage vessel or a group thereof at a time in the future, e.g. a day ahead. Generally, there are certain hours, e.g. during the night when no hot water is used and hence there is some flexibility as to when consumption of electricity can be scheduled e.g. during the night as there is some flexibility in the choice of the time at which the hot water storage tank is heated and hence consumes electricity or when the cold storage vessel is cooled. All that is necessary is that there is adequate hot water available for the next shower or cold water for air conditioning when the temperature is highest during the day. Typically, heating a residential boiler, for example is set using a simple timer switch to operate during the night so that there is presently no use made of flexibility in the time during the night when the boiler is heated.

The temperature of the water in a thermal storage vessel is related to and can be converted into a state of charge (SoC) i.e. relative to the maximum temperature and hence the maximum energy that the thermal energy vessel 10 may store. Temperature sensors or detectors 14, 15, 16, 17 can be provided distributed through the vessel 10. If available in the vessel 10 the external temperature sensor 13a may be provided by an internal sensor 13a'. If available in the vessel 10 the external temperature sensor 13b may be provided by an internal sensor 17. Water temperature and SoC are energy state values for the boiler 10 and can be expressed in many different ways, e.g. water temperature(s), average water temperature, median water temperature, 1-SoC (this is a measure of how much energy can be supplied to the boiler before the maximum water temperature is reached) as a scaled measure, 1/SoC, 1/1-SoC, i.e. a function of SoC, etc. In embodiments of the present invention predicted times when water is to be supplied and times when electric energy is required to charge the vessels as well as any of these values mentioned above can be derived by local intelligence in a controller 30 or a computer 40 or a building controller 47 or a cluster controller 49 or a central controller 46 that uses historical records that it has stored to calculate the relevant values.

In embodiments of the present invention hot or cold water consumption and/or electricity consumption can be used optionally together with a State of Charge (SoC) characterisation of the thermal storage vessels in order to know the flexibility of the hot or cold water thermal storage vessels. This flexibility information can be used by any of:

- network operators for system balancing and reserves,
- energy suppliers or generators for balancing the portfolio of generation and consumption,
- any actor active within an electricity supply and/or distribution system.

Embodiments of the present invention can be used in stabilizing or balancing of an electricity supply system and/or electricity distribution and/or transmission grid, or otherwise in offering other services, e.g., ancillary, balancing or grid congestion management services. A central controller 46 can be configured to provide stabilizing or balancing of the electricity supply system and/or electricity distribution and/or transmission grid, or otherwise to offer other services, e.g., ancillary, balancing or grid congestion management services.

Prediction techniques which can be applied to the data collected by the controller 30 or a or the local or remote computer 40 or a or the building controller 47 or a or the cluster controller 49 or a or the central controller 46 for use in any of the embodiments of the present invention, include (not an exhaustive list):

a) averaging methods;
b) statistical methods including regression and time series methods;
c) machine learning and arteficial intelligence including Neural Networks and pattern recognition or matching methods.

To make predictions historical data is used, e.g. energy consumption and weather data. For example, in some countries hourly outside temperature observations can be obtained from meteorological organisations. If required these can be interpolated to obtain other values such as 15-min values. Human scheduling and behaviour affects energy consumption patterns. Hence, the historical data can comprise information related to working days, week days and holidays for example.

**Averaging methods:**

Averaging methods can be based on recent (historical) consumption. The outputs of the flow meters and the temperature sensors in embodiments of the present invention can be used to calculate the heat energy flux in the liquid dispensed from a thermal buffer or boiler. Predictions can be made based on average values calculated by a simple linear combination of heat energy flux values at certain times, e.g. simple addition at similar time instants. Similar time instants can be the same times each day or the days may be grouped in week days, weekends, national holidays etc. More complex averaging methods can be used such as selecting similar times based on weeks, or months.

An example of an averaging method is to predict the next days consumption by taking the 15 minute or hourly average of a number such as three or five or ten most recent days. Days can be chosen from a pool of more previous days, e.g. selecting from ten or 14 previous days those with the highest average load. The days may be selected starting from a number of days in the past, e.g. two days prior to prediction. When predicting a weekday consumption one can exclude weekends or holidays and vice versa. When predicting a weekday or a day of the month consumption one can use values only from the same day of the week or day of the month in the past. Other days that can be excluded are those with extreme values, e.g. when there was a sharp drop in the energy consumption. Further rules may be applied such as selecting a day only if the average consumption on that day is more than a certain percentage, e.g. more than 25% of the last selected day. As electricity consumption is often closely linked to human behaviour, human schedules and activities are time related features which are important. Long term predictions can include selecting days on the seasons or time of year.

**Regression methods:**

Regression methods regress a linear function of parameters against known data points. For example an equation can be constructed from relevant factors such as outside temperature, time of the day or week or month, each factor being multiplied by a co-efficient. The regression is designed to better describe the relationship between these various factors and the collected historical data.

**Regression tree methods** can be built using weather and human scheduling data for prediction. Regression Tree methods combine several independent features into a linear function, to represent complex data that cannot be effectively modelled by linear regression. It evaluates the effect of different feature combinations on the prediction accuracy. Probabilistic linear regression and Gaussian process regression models can be used. A regression tree can be used to cluster similar data. Regression methods can be non-linear and non-parametric. Factors that can be included in the regression equation, for example can be maximum, minimum and average consumption and temperature of historical data, e.g. the last 1-hour, 24-hours, and 48-hours, day of the week, day of the year and holidays. Regression tree methods recursively partition data into smaller regions, based on ordinal or numeric features, until they can be represented by a constant or a linear regression model.

**Time series:**

Time Series methods predict future values based on previous observations. Time series predictions comprise multiple granularities, e.g., short, medium, and long-term and these predictions are generated for different time horizons. One such method is the Auto-Regressive Integrated Moving Average.

**Artificial Intelligence (AI):**

AI techniques, such as neural networks, expert systems and pattern matching techniques can be used for prediction, for example, hourly electricity consumption prediction for the next day can be based on pattern sequence similarity.

**Machine learning**

Machine learning techniques relate the dynamic response of the system to changes in relevant features. The response function can be complex, time varying, etc. The response function is used to steer the system according to external objectives and constraints. For example, the controller 46 can steer internal systems in the grid.

Machine learning can be ordered in categories. Machine learning techniques that can be used are, among others:

- Reinforcement learning or other dynamic programming techniques
- Artificial neural networks
- Random forests
- Support vector machines
- Linear regression
- Supervised learning
- Unsupervised learning

Supervised learning: The computer is presented with the historical data from the thermal storage vessels and other relevant data with the prediction of the energy consumption being given by a "teacher", and the goal is to learn a general rule that maps inputs to outputs.

Unsupervised learning: No labels are given to the learning algorithm, leaving it on its own to find structure in its input. Unsupervised learning can be a goal in itself (discovering hidden patterns in the historical data collected from the thermal storage vessels) or a means towards an end (feature learning = determine features that are critical to predicting future energy consumptions).

Reinforcement learning: A computer program interacts with a dynamic environment in which it must achieve the prediction of the future energy consumption of the thermal storage vessels without a teacher explicitly telling it whether it has come close to its goal.

In classification, inputs are divided into two or more classes, and the learner must produce a model that assigns unseen inputs to one or more (multi-label classification) of these classes.

Dimensionality reduction simplifies inputs by mapping them into a lower-dimensional space.

The controller 46 needs learn how the system will react to changes certain variables. Response functions can be used which tell how the system will react or response in any given situation.

The response function is a function that predicts the energy consumption as function of a series of features. These features contain (some of) external variables, possibly some additional variables and manipulated external variables. The controller 46 can use the response function to predict future consumption.

The aim of the response function is to forecast the energy consumption (electric and/or heat/cooling), based on some known variables.

Features that can be used to create the response function can include any, some or all of:

- The day in the week
- The day in the year
- The hour in the day
- The economic activity
- Stock market prices
- Commodity prices
- Weather forecasts
- Energy consumption forecasts
- Energy market prices
- Energy market forecasts.
- The implicit control signal that has been used in the recent past
- Implicit control signal

But this list is not exhaustive.

The feature vector is designated with f and the output by y.

$$H(f) = y$$

with *H* a function of the features *f* (1*xM* vector) and *y* a vector with the energy consumption in the future (*Nx*1).

The response function is the mathematical relation between the features and the output. The output can be modelled as a simple linear combination of all features (and a constant). The main advantage of a linear relation is that the estimation of the parameters is a stable process with a lot of known properties, which can be used to check the solution.

If the nature of the response function is nonlinear, which can be the case if the system is saturated, machine learning has a broad range of solutions for this, like support vector machines, neural networks, logistic regression etc.

**Balancing of the electrical grid**

The data passed from the controller 30 to computer 40 or controllers 47, 49, or 46 includes a prediction of future consumption (e.g. a day ahead) at time intervals such as 15 minute or hourly intervals. In addition the activities of the switch 20 have also been recorded and can be used to identify times when vessels 10 can be charged. The predicted data from many vessels 10 can be aggregated, e.g. the predictions at each time interval a day ahead can be added to give a total value for that time interval.

From this data the electric grid can be balanced. For example the central controller 46 can be adapted to co-ordinate future dispensing of hot or cold water from the plurality of thermal storage vessels and the charging with electrical energy of each vessel 10 to thereby stabilise the electrical distribution network.

Stabilisation of the electrical network is achieved via switching on or off the electrical load (resistance, heat pump or pump) of the device, at the instruction of the electrical network operator, balance responsible party or other party having balancing responsibility

In this regard, the profiling may include a prediction of consumption of electrical energy at a time in the future, e.g. a day ahead, at time intervals during the day of a thermal energy storage device or a group of thermal energy storage devices. The prediction can include a report of consumption of electrical energy at a time in the future, e.g. a day ahead, at time intervals during the day of a thermal energy storage device or a group of thermal energy storage devices. The profiling may include prediction of dispensing of hot or cold water from a thermal energy storage device or a group of thermal energy storage devices at a time in the future, e.g. a day ahead, at time intervals during the day, etc. The profiling may include a report detailing the prediction of dispensing of hot or cold water from a thermal energy storage device or a group of thermal energy storage devices at a time in the future, e.g. a day ahead, at time intervals during the day, etc.

An output of any of the methods or systems according to embodiments of the present invention can be use of the profiling:

to automatically activate a controllable switch to charge a thermal energy storage device or a group of thermal energy storage devices using electrical energy,
automatically operating a controllable switch of a thermal energy storage device or a group of thermal energy storage devices to prevent charging a thermal energy storage device or a group of thermal energy storage devices using electrical energy,
to prepare and transmit technical information to any of:

- a consumer
- a network operator for system balancing and reserves
- an energy supplier or generator for balancing the portfolio of generation and consumption
- any actor active within an electricity supply and/or distribution system,

relating to adjustments to the operation of one or more thermal energy storage vessels and the supply of electricity thereto.

An embodiment of the present invention describing an energy and temperature control system can be implemented by a digital device such as the controller 30, or the local controller 47 or the cluster controller 49 or the central controller 46 with processing capability including one or more microprocessors, processors, microcontrollers, or central processing units (CPU) and/or a Graphics Processing Units (GPU) adapted to carry out the respective functions programmed with software, i.e. one or more computer programs. The software can be compiled to run on any of the microprocessors, processors, microcontrollers, or central processing units (CPU) and/or a Graphics Processing Units (GPU).

Such a device (e.g. the controller 30, or the local controller 47 or a cluster controller 49 or a central controller 46) may be a standalone device or may be embedded in another electronic component. The device (e.g. the controller 30, or the local controller 47 or a cluster controller 49 or a central controller 46) have memory (such as non-transitory computer readable medium, RAM and/or ROM), an operating system, optionally a display such as a fixed format display such as an OLED display, data entry devices such as a keyboard, a pointer device such as a "mouse", serial or parallel ports to communicate with other devices, network cards and connections to connect to a network.

The software can be embodied in a computer program product adapted to carry out the following functions for such temperature and energy control systems or methods, when the software is loaded onto the respective device or devices e.g. the controller 30, or the local controller 47 or the cluster controller 49 or the central controller 46, and executed on one or more processing engines such as microprocessors, ASIC's, FPGA's etc. The methods can be applied to a system having a plurality of thermal energy storage vessels and an electrical distribution system for supplying electrical power to the thermal energy storage vessels, a hot water thermal energy storage vessel having a fresh water inlet and a hot water outlet or a cold water thermal energy storage vessel having a fresh water inlet and a cold water outlet, further comprising means for charging the thermal energy storage vessels using electrical energy provided by the electrical system.

The software can be embodied in a computer program product adapted to carry out the following functions for such temperature and energy control systems or methods, when the software is loaded onto the respective device or devices e.g. the controller 30, or the local controller 47 or the cluster controller 49 or the central controller 46, and executed on one or more processing engines such as microprocessors, ASIC's, FPGA's etc.:

recording measurements of the timing and the amount of electrical energy consumed by the hot or cold water thermal energy storage vessel or group of thermal energy storage vessels over a time period,

recording measurements of the amount of hot or cold water dispensed over the time period from a hot or cold water thermal energy storage vessel or a group of thermal energy storage vessels, respectively,

calculating and storing historical data of thermal energy consumed by or dispensed from each thermal energy storage vessel or from the group of thermal energy storage vessels for the time period,

predicting future times of supply of water or consumption of electrical energy to be used for charging each thermal energy storage vessel or group of thermal energy storage vessels from the historical data of dispensed or consumed thermal energy.

The software can be embodied in a computer program product adapted to carry out the following functions for such temperature and energy control systems or methods, when the software is loaded onto the respective device or devices e.g. the controller 30, or the local controller 47 or the cluster controller 49 or the central controller 46, and executed on one or more processing engines such as microprocessors, ASIC's, FPGA's etc.:

co-ordinating future dispensing of hot or cold water from each hot or cold water thermal energy storage vessel or group of thermal energy storage vessels and the charging with electrical energy of each hot or cold water thermal energy storage vessel or group of thermal energy storage vessels to thereby stabilise the electrical distribution network.

The software can be embodied in a computer program product adapted to carry out the following functions for such temperature and energy control systems or methods, when the software is loaded onto the respective device or devices e.g. the controller 30, or the local controller 47 or the cluster controller 49 or the central controller 46, and executed on one or more processing engines such as microprocessors, ASIC's, FPGA's etc.:

predicting future times of supply of water or consumption of electrical energy to be used for charging each thermal energy storage vessel or group of thermal energy storage vessels using any of: averaging methods, time series methods, regression methods, regression tree methods, artificial intelligence methods, expert systems, time series methods, or machine learning methods.

The software can be embodied in a computer program product adapted to carry out the following functions for such temperature and energy control systems or methods, when the software is loaded onto the respective device or devices e.g. the controller 30, or the local controller 47 or the cluster controller 49 or the central controller 46, and executed on one or more processing engines such as microprocessors, ASIC's, FPGA's etc.:

calculating heat energy supplied in the volume of water dispensed from each thermal energy storage vessel or the group of thermal energy storage vessels.

The software can be embodied in a computer program product adapted to carry out the following functions for such temperature and energy control systems or methods, when the software is loaded onto the respective device or devices e.g. the controller 30, or the local controller 47 or the cluster controller 49 or the central controller 46, and executed on one or more processing engines such as microprocessors, ASIC's, FPGA's etc.:

execution of the software does not alter local controller security based set-points of legacy equipment, does not override security cut-outs or fuses or suppress alarms of legacy equipment, does not override thermostats of legacy equipment, which continue to perform their duties as previously, or
does not override local security features of legacy equipment, which would result in depletion of water in the storage vessels.

The software can be embodied in a computer program product adapted to carry out the following functions for such temperature and energy control systems or methods, when the software is loaded onto the respective device or devices e.g. the controller 30, or the local controller 47 or the cluster controller 49 or the central controller 46, and executed on one or more processing engines such as microprocessors, ASIC's, FPGA's etc. :

prediction of consumption of electrical energy at a time in the future, e.g. a day ahead, at time intervals during the day, or

preparing an transmitting a report, (e.g. automatically) of consumption of electrical energy at a time in the future, e.g. a day ahead, at time intervals during the day, e.g. prediction of dispensing of hot or cold water at a time in the future, e.g. a day ahead, at time intervals during the day, etc.

preparing an transmitting a report (e.g. automatically) detailing the prediction of dispensing of hot or cold water at a time in the future, e.g. a day ahead, at time intervals during the day, etc.

The software can be embodied in a computer program product adapted to carry out the following functions for such temperature and energy control systems or methods, when the software is loaded onto the respective device or devices e.g. the controller 30, or the local controller 47 or the cluster controller 49 or the central controller 46, and executed on one or more processing engines such as microprocessors, ASIC's, FPGA's etc. :

to automatically activate a controllable switch to charge a thermal energy storage device or a group of thermal energy storage devices using electrical energy,

to automatically operating a controllable switch to prevent charging a thermal energy storage device or a group of thermal energy storage devices using electrical energy,

to prepare and transmit technical information to any of:

- a consumer
- a network operator for system balancing and reserves
- an energy supplier or generator for balancing the portfolio of generation and consumption
- any actor active within an electricity supply and/or distribution system,

relating to adjustments to the operation of one or more thermal energy storage vessels and the supply of electricity thereto.

Any of the software mentioned above may be stored on a non-transitory signal storage means such as an optical disk (CD-ROM, DVD-ROM), magnetic tape, solid state memory such as a flash drive, magnetic disk such as a computer hard drive or similar.

**Claims**

1. A method of operating a system for providing hot or cold water, the system having a plurality of thermal energy storage vessels and an electrical distribution system for supplying electrical power to the thermal energy storage vessels, a hot water thermal energy storage vessel having a fresh water inlet and a hot water outlet or a cold water thermal energy storage vessel having a fresh water inlet and a cold water outlet, further comprising means for charging the thermal energy storage vessels using electrical energy provided by the electrical system, and means to measure the timing and the amount of electrical energy consumed by the hot or cold water thermal energy storage vessel or group of thermal energy storage vessels over a time period, the method comprising:

retro-fitting means for measuring the amount of hot or cold water dispensed over the time period from a hot or cold water thermal energy storage vessel or a group of thermal energy storage vessels, respectively,
calculating and storing historical data of thermal energy consumed by or dispensed from each thermal energy storage vessel or from the group of thermal energy storage vessels for the time period, and
predicting future times of supply of water or consumption of electrical energy to be used for charging each thermal energy storage vessel or group of thermal energy storage vessels from the historical data of dispensed or consumed thermal energy.

2. The method of claim 1, further comprising retro-fitting the means to measure the amount of electrical energy consumed by the hot or cold water thermal energy storage vessel or group of thermal energy storage vessels over the time period.

3. The method of claim 1 or 2 further comprising: co-ordinating future dispensing of hot or cold water from each hot or cold water thermal energy storage vessel or group of thermal energy storage vessels and the charging with electrical energy of each hot or cold water thermal energy storage vessel or group of thermal energy storage vessels to thereby stabilise the electrical distribution network.

4. The method of claim 1 or 2 or 3, wherein the step of retrofitting the means to determine energy supplied in the volume of water dispensed from each thermal energy storage vessel or the group of thermal energy storage vessels comprises retrofitting a volume flow meter and a temperature sensor or detector.

**5.** The method of claim 4, wherein the step of retrofitting the volume flow meter and the temperature sensor or detector includes retrofitting the volume flow meter and temperature sensor or detector at the fresh water inlet of each thermal energy storage vessel or group of thermal energy storage vessels, and/or retrofitting the volume flow meter and the temperature sensor or detector at the outlet of each thermal energy storage vessel or group of thermal energy storage vessels.

**6.** The method of any previous claim, wherein predicting future times of supply of water or consumption of electrical energy to be used for charging each thermal energy storage vessel or group of thermal energy storage vessels comprises any of: averaging methods, time series methods, regression methods, regression tree methods, artificial intelligence methods, expert systems, or machine learning methods.

**7.** The method of any previous claims, wherein the thermal storage vessels are legacy vessels, the method comprising adapting the legacy vessels by addition of the means to calculate heat energy supplied in the volume of water dispensed from each thermal energy storage vessel or the group of thermal energy storage vessels.

**8.** The method of any previous claims, does not alter local controller security based set-points, of legacy equipment, does not override security cut-outs or fuses or suppress alarms of legacy equipment, does not override thermostats of legacy equipment, which continue to perform their duties as previously, or does not override local security features of legacy equipment, which would result in depletion of water in the storage vessels.

**9.** A system for providing hot or cold water, comprising:

a plurality of thermal energy storage vessels and an electrical system for supplying electrical power to the thermal energy storage vessels, a hot water thermal energy storage vessel having a fresh water inlet and a hot water outlet or a cold water thermal energy storage vessel having a fresh water inlet and a cold water outlet, further comprising means for charging the thermal energy storage vessels using electrical energy provided by the electrical system, each thermal energy storage vessel or a group of thermal energy storage vessels having retro-fitted means to measure the timing of, and the energy supplied in the volume of water dispensed from each thermal energy storage vessel or the group of thermal energy storage vessels and retrofitted means to measure the timing of, and the electrical energy consumed by each thermal energy storage vessel or the group of thermal energy storage vessels over the time period, retro-fitted means for calculating and storing historical data of consumed electrical energy and dispensed thermal energy for a time period dispensed from one thermal energy storage vessel or from a group of thermal energy storage vessels, means for predicting from the historical data of dispensed thermal energy and consumed electrical energy, future times of supply of water or consumption of electrical energy to be used for charging each thermal energy storage vessel or group of thermal energy storage vessels.

**10.** The system of claim 9, further comprising: means for co-ordinating future dispensing of hot or cold water from each hot or cold water thermal energy storage vessel or group of thermal energy storage vessels and the charging with electrical energy of each hot or cold water thermal energy storage vessel or group of thermal energy storage vessels to thereby stabilise the electrical distribution network.

**11.** The system of claim 9 or 10, wherein retrofitted means to measure thermal energy supplied in the volume of water dispensed from each thermal energy storage vessel or the group of thermal energy storage vessels comprises a volume flow meter and a temperature sensor or detector.

**12.** The system claim 11, wherein the volume flow meter and the temperature sensor or detector includes the volume flow meter and temperature sensor or detector being located at the fresh water inlet of each thermal energy storage vessel or group of thermal energy storage vessels, and/or
the volume flow meter and the temperature sensor or detector are loaced at the outlet of each thermal energy storage vessel or group of thermal energy storage vessels.

**13.** The system of any of the claims 9 to 12, wherein the means for predicting future times of supply of water or consumption of electrical energy to be used for charging each thermal energy storage vessel or group of thermal energy storage vessels comprises any of: means for executing averaging methods, means for executing time series methods, means for executing regression methods, means for executing regression tree methods, means for executing artificial intelligence methods, means for executing expert systems,, or means for executing machine learning methods.

**14.** A computer program product which executes a method of any of the claims 9 to 13 when executed on a processing engine.

**15.** A non-transitory signal storage means storing the computer program product of claim 14.

Fig. 1

Fig. 2

EP 3 343 128 A1

Europäisches
Patentamt

European
Patent Office

Office européen
des brevets

# EUROPEAN SEARCH REPORT

Application Number

EP 16 20 7021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/121361 A2 (MARQUES DIAS PINTO JOAO PAULO [PT]; MARQUES DIAS PINTO PEDRO EMANUEL []) 22 August 2013 (2013-08-22) | 1-3, 7-10,14, 15 | INV.<br>F24H9/20<br>F24D19/10<br>G06Q50/06 |
| Y | * paragraph [0037] - paragraph [0059]; figures 2a-3b,6 * | 4-6, 11-13 | |
| Y | WO 2013/014411 A2 (ISIS INNOVATION [GB]; ARMSTRONG PETER MICHAEL [GB]) 31 January 2013 (2013-01-31) * page 12; figure 57 * | 4,5,11, 12 | |
| Y | WO 2013/124302 A2 (SMA SOLAR TECHNOLOGY AG [DE]) 29 August 2013 (2013-08-29) * page 3 - page 4; figure 1 * | 6,13 | |
| A | US 2016/216007 A1 (HARBIN III BENJAMIN F [US] ET AL) 28 July 2016 (2016-07-28) * the whole document * | 1-15 | |
| A | CA 2 803 323 A1 (EMERSON ELECTRIC CO [US]) 24 July 2013 (2013-07-24) * the whole document * | 1-15 | |
| A | US 2013/200168 A1 (BUESCHER THOMAS P [US] ET AL) 8 August 2013 (2013-08-08) * the whole document * | 1-15 | TECHNICAL FIELDS SEARCHED (IPC)<br><br>G06F<br>G06Q<br>F24D<br>F28D<br>F24H |
| A | GB 2 446 418 A (UNIV MONTFORT [GB]) 13 August 2008 (2008-08-13) * the whole document * | 1-15 | |

The present search report has been drawn up for all claims

| Place of search | Date of completion of the search | Examiner |
|---|---|---|
| Munich | 17 May 2017 | Riesen, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 7021

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2017

| Patent document cited in search report | | Publication date | Patent family member(s) | | Publication date |
|---|---|---|---|---|---|
| WO 2013121361 | A2 | 22-08-2013 | NONE | | |
| WO 2013014411 | A2 | 31-01-2013 | EP | 2739914 A2 | 11-06-2014 |
| | | | US | 2014321839 A1 | 30-10-2014 |
| | | | WO | 2013014411 A2 | 31-01-2013 |
| WO 2013124302 | A2 | 29-08-2013 | CN | 204115244 U | 21-01-2015 |
| | | | DE | 102012003227 A1 | 22-08-2013 |
| | | | EP | 2834573 A2 | 11-02-2015 |
| | | | WO | 2013124302 A2 | 29-08-2013 |
| US 2016216007 | A1 | 28-07-2016 | NONE | | |
| CA 2803323 | A1 | 24-07-2013 | NONE | | |
| US 2013200168 | A1 | 08-08-2013 | US | 2013200168 A1 | 08-08-2013 |
| | | | US | 2016047572 A1 | 18-02-2016 |
| GB 2446418 | A | 13-08-2008 | GB | 2446418 A | 13-08-2008 |
| | | | GB | 2446530 A | 13-08-2008 |
| | | | GB | 2446972 A | 27-08-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012164102 A